(19) Europäisches Patentamt / European Patent Office / Office européen des brevets

(11) **EP 3 914 495 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **19817186.0**

(22) Anmeldetag: **02.12.2019**

(51) Internationale Patentklassifikation (IPC):
**B60W 40/101** *(2012.01)*    **B60W 40/072** *(2012.01)*
**B60W 30/18** *(2012.01)*    **B60W 30/045** *(2012.01)*
**B60T 8/172** *(2006.01)*    **B60T 8/1755** *(2006.01)*
**B60T 8/17** *(2006.01)*

(52) Gemeinsame Patentklassifikation (CPC):
**B60W 40/101; B60T 8/1706; B60T 8/17552;**
**B60W 30/045; B60W 30/18145; B60W 30/18172;**
**B60W 40/072;** B60T 2210/24; B60T 2210/36;
B60W 2050/0031; B60W 2050/0033;
B60W 2520/10; B60W 2520/105; B60W 2520/125;
B60W 2520/14;                                   (Forts.)

(86) Internationale Anmeldenummer:
**PCT/EP2019/083275**

(87) Internationale Veröffentlichungsnummer:
**WO 2020/151860 (30.07.2020 Gazette 2020/31)**

(54) **VERFAHREN UND SYSTEM ZUR TRAKTIONSKONTROLLE EINES EINSPURIGEN KRAFTFAHRZEUGS UNTER BERÜCKSICHTIGUNG DES SCHRÄGLAUFWINKELS DES HINTERRADES**

METHOD AND SYSTEM FOR THE TRACTION CONTROL OF A SINGLE-TRACK MOTOR VEHICLE TAKING THE SLIP ANGLE OF THE REAR WHEEL INTO CONSIDERATION

PROCÉDÉ ET SYSTÈME DE COMMANDE DE LA TRACTION D'UN VÉHICULE À MOTEUR À VOIE UNIQUE EN FONCTION DE L'ANGLE DE DÉRIVE DE LA ROUE ARRIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2019   DE 102019101392**

(43) Veröffentlichungstag der Anmeldung:
**01.12.2021   Patentblatt 2021/48**

(73) Patentinhaber: **Bayerische Motoren Werke Aktiengesellschaft**
**80809 München (DE)**

(72) Erfinder:
• **HEIDRICH, Martin**
  **83410 Laufen-Leobendorf (DE)**
• **RANK, Josef**
  **85301 Sünzhausen (DE)**

(56) Entgegenhaltungen:
DE-A1-102010 003 951    DE-A1-102012 219 935
DE-A1-102016 223 070    US-A1- 2013 144 476

(52) Gemeinsame Patentklassifikation (CPC): (Forts.)
B60W 2520/16; B60W 2520/18; B60W 2530/10;
B60W 2540/18; B60W 2552/30; B60W 2552/40;
B60W 2556/35; B60W 2556/50

**Beschreibung**

Die Erfindung betrifft ein Verfahren zur Traktionskontrolle eines einspurigen Kraftfahrzeugs.

Im Stand der Technik sind verschiedene Methoden zur Traktionskontrolle sowohl von zweispurigen Kraftfahrzeugen, wie Pkw, als auch für einspurige Kraftfahrzeuge, wie Motorräder, bekannt. Die Traktionskontrolle wird auch Antriebsschlupfregelung (ASR) oder automatische Schlupfregelung genannt, wobei die verschiedenen im Markt verbreiteten Systeme zur Traktionskontrolle anbieterspezifische Bezeichnungen aufweisen.

Durch die Traktionskontrolle wird insbesondere bei plötzlichen Beschleunigungsvorgängen oder bei Untergrund mit geringer Haftreibung, wie bei Eis, Schnee, Rollsplitt oder Nässe, verhindert, dass ein Antriebsrad und somit bei Motorrädern das Hinterrad durchdreht und das Fahrzeug seitlich ausbricht.

Hierfür wird durch die Traktionskontrolle das Antriebsmoment am Hinterrad gezielt durch Eingriff in das Motormanagement und dadurch die Antriebskraft des Motors beeinflusst.

Die im Stand der Technik bekannten Verfahren zur Traktionskontrolle basieren bei Kraftfahrzeugen meist lediglich auf dem Radschlupf, also dem Verhältnis der Drehzahl eines angetriebenen Rades zu der Drehzahl eines (hypothetischen) nicht angetriebenen und daher formschlüssig mitlaufenden Rades. Bei einspurigen Kraftfahrzeugen wird zudem oft eine Fahrzeugschräglage berücksichtigt, durch welche sich die Reifen- bzw. Radeigenschaften des Kraftfahrzeugs ändern können und die Bestimmung des Radschlupfs beeinflusst wird.

Darüber hinaus ist bei einspurigen Kraftfahrzeugen jedoch für den Radschlupf und für eine Traktionskontrolle am Antriebs- bzw. Hinterrad auch der Schräglaufwinkel des Hinterrades relevant, welcher jedoch meist nur durch eine komplexe und teurere Sensorik erfassbar ist und daher nicht oder nur selten bei der Traktionskontrolle berücksichtigt wird. Als Schräglaufwinkel eines Rades wird der Winkel zwischen dem Geschwindigkeitsvektor des Rades im Radaufstandspunkt auf der Fahrbahn und der Schnittlinie zwischen Radmittenebene und Fahrbahnebene verstanden.

Der Schräglaufwinkel wird bei dem Großteil der bekannten Verfahren zur Traktionskontrolle eines einspurigen Kraftfahrzeugs nicht verwendet. Hinzukommt, dass bei einigen Verfahren, bei welchen der Schräglaufwinkel berücksichtigt wird, für eine Bestimmung des Schräglaufwinkels lediglich der Gierwinkel des Kraftfahrzeugs zur Indikation der Lage im Raum herangezogen wird, so dass ein daraus bestimmter Schräglaufwinkel fehlerhaft sein kann, da ein Motorrad bzw. ein einspuriges Kraftfahrzeug weitere für die Traktionskontrolle und für den Schräglaufwinkel relevante Freiheitsgrade, insbesondere Nick- und Rollwinkel, aufweist. Ein fehlerhafter Schräglaufwinkel kann sich in der Traktionskontrolle fortsetzen und ein fehlerhaftes oder unvorhersehbares Verhalten des Fahrzeugs verursachen.

Auch beispielsweise aus dem Dokument DE 10 2016 223070 A1 ist ein Verfahren zur Bestimmung eines Schräglaufwinkels bekannt, wobei lediglich ein einzelner Schräglaufwinkel basierend auf einer einzelnen Berechnungsmethode bestimmt wird und keine weiteren Berechnungsmethoden bzw. Methoden zur Bestimmung von Schräglaufwinkeln berücksichtigt werden.

Auch die Verwendung mehrerer Berechnungsmethoden, um dadurch einen genaueren Wert zu erhalten ist grundsätzlich in den Dokumenten DE 10 2012 219935 A1, US 2013/144476 A1 und DE 10 2010 003951 A1 beschrieben.

Der Erfindung liegt deshalb die Aufgabe zugrunde, die vorgenannten Nachteile zu überwinden und ein Verfahren zur Traktionskontrolle unter der Berücksichtigung des Schräglaufwinkels des Hinterrades bereitzustellen, wobei der Schräglaufwinkel einfach und kostengünstig ermittelbar sein soll.

Diese Aufgabe wird durch ein Verfahren gemäß Anspruch 1 und ein System gemäß Anspruch 12 gelöst.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1 ein Verfahren zur Bestimmung des Schräglaufwinkels $\lambda_r$;

Fig. 2 ein Verfahren zur Bestimmung des Schräglaufwinkels $\lambda_{r3}$.

Die Figuren sind beispielhaft schematisch. Gleiche Bezugszeichen in den Figuren weisen auf gleiche funktionale und/oder strukturelle Merkmale hin.

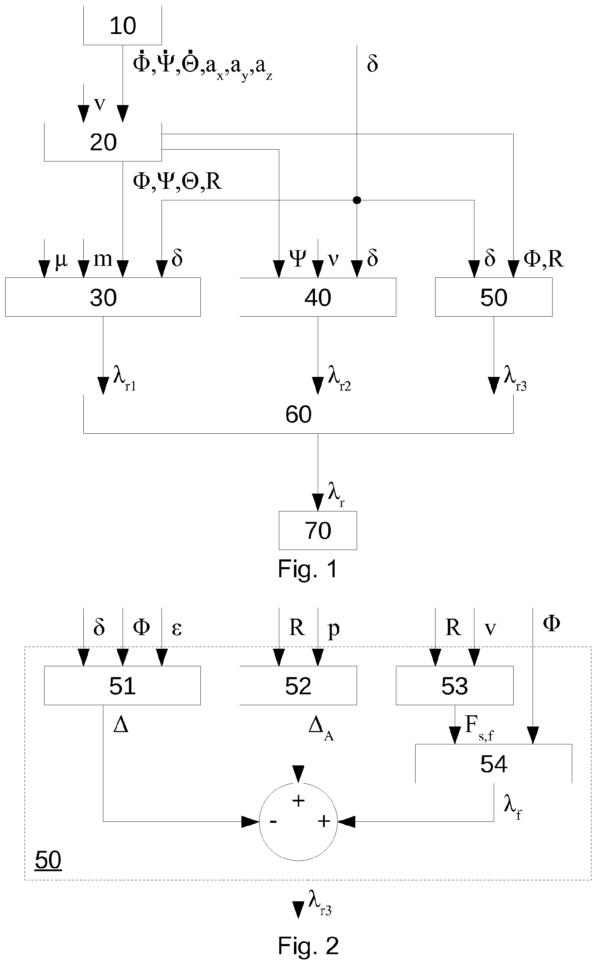

Figur 1 zeigt schematisch den Ablauf bei der Bestimmung des Schräglaufwinkels $\lambda_r$ unter der Verwendung aller drei Schräglaufwinkel $\lambda_{r1}$, $\lambda_{r2}$, $\lambda_{r3}$.

Die Rollrate $\dot{\Phi}$, Gierrate $\dot{\Psi}$ und Nickrate $\dot{\Theta}$ sowie die Beschleunigungen $a_x$, $a_y$ und $a_z$ in die drei Raumrichtungen x, y und z werden durch die inertiale Messeinheit 10 (IMU) ermittelt und der Umrechnung 20 bereitgestellt. Bei der Umrechnung 20 werden aus Rollrate $\dot{\Phi}$, Gierrate $\dot{\Psi}$ und Nickrate $\dot{\Theta}$ sowie aus der Fahrzeuggeschwindigkeit v der Rollwinkel $\Phi$, der auch als Schräglagenwinkel bezeichnet wird, der Gierwinkel $\Psi$ und der Nickwinkel $\Theta$ sowie der Kurvenradius R der von dem Kraftfahrzeug beschriebenen Kurvenfahrt bestimmt.

Die drei Schräglaufwinkel $\lambda_{r1}$, $\lambda_{r2}$ und $\lambda_{r3}$ werden anschließend auf drei sich unterscheidende Arten bestimmt, so dass sich ein eventueller Fehler beziehungsweise eine Abweichung des jeweiligen Schräglaufwinkels $\lambda_{r1}$, $\lambda_{r2}$ und $\lambda_{r3}$ von dem tatsächlichen Schräglaufwinkel am Hinterrad kompensieren lässt.

Der erste Zustandsschätzer 30 ist ein Kalman-Filter, in welchem ein lineares Fahrzeugmodell hinterlegt ist. Aus einer Fahrzeugmasse m, einem Reibwert $\mu$, den

durch die IMU 10 ermittelten Größen und dem Lenkwinkel $\delta$ wird der erste Schräglaufwinkel $\lambda_{r1}$ bestimmt.

Sowohl die Fahrzeugmasse m als auch der Reibwert $\mu$ können basierend auf Sensordaten "geschätzt" werden. Beispielsweise kann die Fahrzeugmasse aus miteinander addierten Einzelwerten zusammengesetzt sein. Dazu kann ein Leergewicht des Fahrzeugs bekannt sein, ein Kraftstoffgewicht durch einen Tankfüllstand bestimmt werden und beispielsweise ein Gewicht der Personen auf dem Fahrzeug aus einem durch Sensoren erfassten Federverhalten ermittelt werden.

Für die Bestimmung des ersten Schräglaufwinkels $\lambda_{r1}$ gilt:

$$\lambda_{r1} = \frac{F_{s,r}}{\alpha_r}$$

$$F_{s,r} = f_1\{\mu, \Phi, F_{N,r}\}$$

$$\alpha_r = f_2\{\mu, \Phi, F_{N,r}\}$$

$$F_{s,f} * \cos\Delta + F_{s,r} + m * Y_G * \dot{\Psi}^2 = 0$$

Die Funktionen f1 und f2 sind dabei jeweils in dem ersten Zustandsschätzer 30 hinterlegt.

Der zweite Schräglaufwinkel $\lambda_{r2}$ wird anschließend oder parallel zu dem ersten Schräglaufwinkel $\lambda_{r1}$ bestimmt. Dazu wird ein als erweiterter Kalman-Filter realisierter zweiter Zustandsschätzer 40 verwendet, welcher als Eingangsgrößen den Gierwinkel $\Psi$ den Kurswinkel v und den Lenkwinkel $\delta$ verwendet, wobei durch das erweiterten Kalman-Filter die Beobachtung bzw. die Verwendung eines nichtlinearen Modells des Fahrzeugs möglich ist.

Der Kurswinkel v kann aus einer Änderung der Fahrzeugposition bestimmt werden, welche durch ein GPS ermittelt werden kann. Alternativ dazu ist die Bestimmung des Kurswinkels v durch eine mit einem Magnetometer gemessene Änderung des Erdmagnetfelds möglich. Um einen exakten Kurswinkel v zu erhalten, sieht die gezeigte Ausführungsform vor, dass ein Kurswinkel v verwendet wird, welcher aus einer Datenfusion hervorgeht. Dazu wird ein erster Kurswinkel v1 mithilfe des GPS und ein zweiter Kurswinkel v2 mithilfe des Magnetometers ermittelt und diese beiden Kurswinkel v1, v2 zu einem Kurswinkel v verrechnet. Eine sehr einfache Möglichkeit ist beispielsweise, den Mittelwert aus den Kurswinkeln v1, v2 zu bestimmen und als Kurswinkel v zu verwenden. Alternativ dazu kann jedoch auch eine Datenfusion mittels eines weiteren Kalman-Filters durchgeführt werden.

Parallel oder anschließend wird ein dritter Schräglaufwinkel $\lambda_{r3}$ durch die Bestimmung 50 ermittelt.

Als wesentliche Eingangsgrößen werden hierfür der Lenkwinkel $\delta$ sowie der durch die IMU 10 bestimmte Rollwinkel $\Phi$ und der Radius R verwendet. Die Bestimmung 50 des dritten Schräglaufwinkels $\lambda_{r3}$ wird beispielhaft zu Figur 2 näher erläutert.

Für die Bestimmung aller drei Schräglaufwinkel $\lambda_{r1}$, $\lambda_{r2}$ und $\lambda_{r3}$ wird jeweils eine zum gleichen Zeitpunkt erfasste Datenbasis verwendet, so dass beispielsweise der Lenkwinkel $\delta$ jeweils identisch ist.

Nachdem die drei Schräglaufwinkel $\lambda_{r1}$, $\lambda_{r2}$ und $\lambda_{r3}$ bestimmt wurden, werden diese durch die Datenfusion 60 miteinander verrechnet. Die Datenfusion 60 bestimmt bei der dargestellten Ausführungsform mittels eines weiteren Kalman-Filters den Schräglaufwinkel $\lambda_r$, welcher dem tatsächlichen Schräglaufwinkel am Hinterrad mit einer höheren Wahrscheinlichkeit entspricht als die drei Schräglaufwinkel $\lambda_{r1}$, $\lambda_{r2}$ und $\lambda_{r3}$ jeweils für sich. Der so bestimmte Schräglaufwinkel $\lambda_r$ wird anschließend der Traktionskontrolle 70 zur Verfügung gestellt.

Alternativ zu dem in Figur 1 gezeigten Verfahren kann beispielsweise auch nur ein Teil der Schräglaufwinkel $\lambda_{r1}$, $\lambda_{r2}$ und $\lambda_{r3}$ zur Bestimmung des Schräglaufwinkels $\lambda_r$ verwendet werden.

Die Modelle bzw. die Zustandsschätzer sowie die Berechnungen und die dafür notwendigen Konstanten können beispielsweise in einem Steuergerät oder in dem Steuergerät der Traktionskontrolle hinterlegt sein, so dass die Bestimmung des Schräglaufwinkels $\lambda_r$ mit dem Steuergerät ausgeführt werden kann, wobei die weiteren notwendigen Sensorwerte bzw. Variablen durch beispielsweise die IMU 10 und einen Lenkwinkelsensor dem Steuergerät bereitgestellt werden.

Figur 2 zeigt beispielhaft den Ablauf zur Bestimmung des dritten Schräglaufwinkels $\lambda_{r3}$. Als Eingangswerte für die Bestimmung 50 dienen neben dem Lenkwinkel $\delta$, dem Schräglauf- bzw. Rollwinkel $\Phi$ und dem Kurvenradius R auch die Geschwindigkeit v des Fahrzeugs. Zur Bestimmung des dritten Schräglaufwinkels $\lambda_{r3}$ werden darüber hinaus noch der konstante Nachlaufwinkel $\varepsilon$ und der Radstand p verwendet.

Bei der Bestimmung 51 des kinematischen Lenkwinkels $\Delta$, also den zu der tatsächlichen Kurvenfahrt führenden theoretischer Lenkwinkel, wird sowohl der tatsächliche Lenkwinkel $\delta$ als auch der Rollwinkel $\Phi$ und der Nachlaufwinkel $\varepsilon$ berücksichtigt, welche gemeinsam zu dem kinematischen Lenkwinkel $\Delta$ führen.

Zudem wird durch die Berechnung 52 der Ackermannwinkels $\Delta_A$ bestimmt, welcher sich gemäß des Einspurmodells unter der Annahme kleiner Winkel zu $\Delta_A = p/R$ ergibt.

Ferner gilt für das Einspurmodell bei kleinen Winkeln:

$$\Delta = \frac{p}{R} + \lambda_f - \lambda_r$$

$$\lambda_r = \Delta_A + \lambda_f - \Delta$$

Zur Bestimmung des vorderen Schräglaufwinkels $\lambda_f$ wird mithilfe eines dritten Zustandsschätzers 53 aus einem gefahrenen Kurvenradius R und der Fahrzeuggeschwindigkeit v die Reifenquerkraft $F_{s,f}$ am Vorderreifen bestimmt. Das Verhältnis der vorderen Reifenquerkraft $F_{s,f}$ bei einer durch den Rollwinkel $\Phi$ beschriebenen Schräglage zu dem vorderen Schräglaufwinkel $\lambda_f$ ist bekannt und beispielsweise durch ein Kennfeld oder eine Funktion hinterlegt, so dass daraus der vordere Schräglaufwinkel $\lambda_f$ und daraus der hintere

Schräglaufwinkel $\lambda_r$ als dritter Schräglaufwinkel $\lambda_{r3}$ bestimmbar ist.

Die Erfindung beschränkt sich in ihrer Ausführung nicht auf die vorstehend angegebenen bevorzugten Ausführungsbeispiele. Der Schutzbereich der Erfindung wird durch die angehängten Ansprüche definiert.

Variablen- und Bezugszeichenliste:

| | |
|---|---|
| $\delta$ | Lenkwinkel |
| $\Delta$ | kinematischer Lenkwinkel |
| $\varepsilon$ | Nachlaufwinkel |
| p | Radstand |
| $Y_G$ | Abstand des Fahrzeugschwerpunkts zur Drehachse |
| v | Fahrzeuggeschwindigkeit |
| R | Kurvenradius |
| $\Delta_A$ | Ackermannwinkel |
| m | Masse des Fahrzeugs |
| v | Kurswinkel |
| $\mu$ | Reibwert zwischen Fahrbahn und Reifen |
| $\alpha_r$ | Schräglaufsteifigkeitskennwert des am Hinterrad montierten Reifens |
| $F_{N,r}$ | Reifennormalkraft vorne |
| $F_{s,f}$ | Reifenquerkraft vorne |
| $F_{s,r}$ | Reifenquerkraft hinten |
| $\lambda_r$ | Schräglaufwinkel hinten |
| $\lambda_f$ | Schräglaufwinkel vorne |
| $\Phi$ | Rollwinkel (Schräglagenwinkel) |
| $\Psi$ | Gierwinkel |
| $\Theta$ | Nickwinkel |
| $\dot{\Phi}$ | Rollrate (Rollgeschwindigkeit) |
| $\dot{\Psi}$ | Gierrate (Giergeschwindigkeit) |
| $\dot{\Theta}$ | Nickrate (Nickgeschwindigkeit) |
| $a_x$ | Beschleunigung in x-Richtung |
| $a_y$ | Beschleunigung in y-Richtung |
| $a_z$ | Beschleunigung in z-Richtung |
| 10 | inertiale Messeinheit (IMU) |
| 20 | Umrechnung |
| 30 | erster Zustandsschätzer |
| 40 | zweiter Zustandsschätzer |
| 50 | Bestimmung des dritten Schräglaufwinkels $\lambda_{r3}$ |
| 51 | Bestimmung des kinematischen Lenkwinkels $\Delta$ |
| 52 | Bestimmung des Ackermannwinkels $\Delta_A$ |
| 53 | dritter Zustandsschätzer |
| 54 | Bestimmung des vorderen Schräglaufwinkels $\lambda_f$ |
| 60 | Datenfusion |
| 70 | Traktionskontrolle |

**Patentansprüche**

1. Verfahren zur Bestimmung eines Schräglaufwinkels $\lambda_r$ eines Hinterrades eines einspurigen Kraftfahrzeuges zur Traktionskontrolle des Hinterrades des einspurigen Kraftfahrzeugs durch einen Regelkreis, wobei der Schräglaufwinkel $\lambda_r$ des Hinterrades als Rückführgröße des Regelkreises durch die folgenden Schritte bestimmt wird:

   • Bestimmen eines ersten Schräglaufwinkels $\lambda_{r1}$ mit einem ersten Zustandsschätzer (30), wobei Eingangsgrößen des ersten Zustandsschätzers (30) zumindest ein Lenkwinkel $\delta$ am Vorderrad des Kraftfahrzeugs und eine Orientierung des Kraftfahrzeugs im Raum sind, **dadurch gekennzeichnet, dass** das Verfahren weiterhin die folgenden Schritte aufweist:
   • Bestimmen eines zweiten Schräglaufwinkels $\lambda_{r2}$ mit einem zweiten Zustandsschätzer (40), wobei Eingangsgrößen des zweiten Zustandsschätzers (40) zumindest ein Lenkwinkel $\delta$ am Vorderrad des Kraftfahrzeugs und ein Bewegungsvektor des Kraftfahrzeugs in einem Massenschwerpunkt des Kraftfahrzeugs sind,
   • Bestimmen eines dritten Schräglaufwinkels $\lambda_{r3}$, wobei der dritte Schräglaufwinkel $\lambda_{r3}$ aus einer für ein Einspurmodell bekannten Beziehung zwischen dem Lenkwinkel $\delta$, einem Ackermannwinkel $\Delta_A$, einem Schräglaufwinkel $\lambda_f$ eines Vorderrades und dem dritten Schräglaufwinkel $\lambda_{r3}$ bestimmt wird und wobei der Schräglaufwinkel $\lambda_f$ aus einem vorbekannten Verhältnis des Schräglaufwinkels $\lambda_f$ zu einem Fahrzeugzustand bestimmt wird, und
   Bestimmen des Schräglaufwinkels $\lambda_r$ aus genau zwei der Schräglaufwinkel $\lambda_{r1}$, $\lambda_{r2}$ und $\lambda_{r3}$ durch eine Datenfusion,
   wobei eine jeweilige Abweichung zwischen den Schräglaufwinkeln $\lambda_{r1}$, $\lambda_{r2}$ und $\lambda_{r3}$ ermittelt wird, und
   wobei der Schräglaufwinkel $\lambda_r$ durch die Datenfusion der zwei Schräglaufwinkel der Schräglaufwinkel $\lambda_{r1}$, $\lambda_{r2}$ und $\lambda_{r3}$ mit der geringsten Abweichung voneinander bestimmt wird.

2. Verfahren nach dem vorhergehenden Anspruch, wobei
   der erste Zustandsschätzer (30) ein Kalman-Filter oder ein Erweiterter Kalman-Filter ist.

3. Verfahren nach einem der vorhergehenden Ansprüche, wobei
   der zweite Zustandsschätzer (40) ein Kalman-Filter oder ein Erweiterter Kalman-Filter ist.

**4.** Verfahren nach einem der vorhergehenden Ansprüche, wobei

die Orientierung des Kraftfahrzeugs im Raum als Eingangsgröße des ersten Zustandsschätzers (30) durch einen Rollwinkel $\Phi$, einen Gierwinkel $\Psi$ und einen Nickwinkel $\Theta$ des Kraftfahrzeuges bestimmt ist.

**5.** Verfahren nach einem der vorhergehenden Ansprüche, wobei

ein Kurvenradius R einer von dem Kraftfahrzeug beschriebenen Kurvenfahrt bestimmt wird und der Kurvenradius R eine Eingangsgröße des ersten Zustandsschätzers (30) ist.

**6.** Verfahren nach dem vorhergehenden Anspruch, wobei

der Kurvenradius R und die Orientierung des Kraftfahrzeugs aus einer Rollrate $\dot{\Phi}$, einer Gierrate $\dot{\Psi}$ und einer Nickrate $\dot{\Theta}$ sowie einer Beschleunigung des Kraftfahrzeugs im Raum und einer Fahrzeuggeschwindigkeit v bestimmt werden.

**7.** Verfahren nach einem der vorhergehenden Ansprüche, wobei

eine Fahrzeugmasse m des Kraftfahrzeugs bestimmt wird,
ein Reibwert $\mu$ zwischen einer Fahrbahn und einem Reifen des Hinterrades bestimmt wird und
die Fahrzeugmasse m und der Reibwert $\mu$ Eingangsgrößen des ersten Zustandsschätzers (30) sind.

**8.** Verfahren nach einem der vorhergehenden Ansprüche, wobei
der Bewegungsvektor des Kraftfahrzeugs als Eingangsgröße des zweiten Zustandsschätzers (40) aus einer Änderung einer mit einem GPS ermittelten Fahrzeugposition und/oder aus einer Änderung eines mit einem Magnetometer gemessenen Erdmagnetfelds bestimmt wird.

**9.** Verfahren nach einem der vorhergehenden Ansprüche, wobei
eine Messabweichung zwischen dem durch die Datenfusion bestimmten Schräglaufwinkel $\lambda_r$ als Messwert und dem bei der Bestimmung des Schräglaufwinkel $\lambda_r$ nicht verwendeten Schräglaufwinkel $\lambda_{r1}$, $\lambda_{r2}$ oder $\lambda_{r3}$ als Referenzwert bestimmt wird.

**10.** Verfahren nach einem der vorhergehenden Ansprüche, wobei
der Fahrzeugzustand zur Bestimmung des dritten Schräglauwinkels $\lambda_{r3}$ durch eine Fahrzeuggeschwindigkeit v des Kraftfahrzeugs, einen Kurvenradius R einer von dem Kraftfahrzeug beschriebenen Kurvenfahrt und einem Rollwinkel $\Phi$ bestimmt ist.

**11.** Verfahren nach dem vorhergehenden Anspruch, wobei

aus dem Kurvenradius R und der Fahrzeuggeschwindigkeit v mit einem dritten Zustandsschätzer (53) eine Reifenquerkraft $F_{s,f}$ an einem Reifen des Vorderrades bestimmt wird und der Schräglaufwinkel $\lambda_f$ für den Rollwinkel $\Phi$ und die Reifenquerkraft $F_{s,f}$ vorbestimmt ist.

**12.** System zur Traktionskontrolle eines Hinterrades eines einspurigen Kraftfahrzeugs umfassend ein Steuergerät, wobei
das Steuergerät ausgebildet ist, einen Schräglaufwinkel $\lambda_r$ gemäß des Verfahrens nach einem der vorhergehenden Ansprüche 1 bis 11 zu bestimmen.

**Claims**

**1.** Method for determining a slip angle $\lambda_r$ of a rear wheel of a single-track motor vehicle for the traction control of the rear wheel of the single-track motor vehicle by a control loop, wherein the slip angle $\lambda_r$ of the rear wheel is determined as a feedback variable of the control loop by the following steps:

• determining a first slip angle $\lambda_{r1}$ using a first state estimator (30), wherein input variables of the first state estimator (30) are at least one steering angle $\delta$ on the front wheel of the motor vehicle and an orientation of the motor vehicle in space, **characterized in that** the method furthermore comprises the following steps:
• determining a second slip angle $\lambda_{r2}$ using a second state estimator (40), wherein input variables of the second state estimator (40) are at least one steering angle $\delta$ on the front wheel of the motor vehicle and a movement vector of the motor vehicle in a mass centre of gravity of the motor vehicle,
• determining a third slip angle $\lambda_{r3}$, wherein the third slip angle $\lambda_{r3}$ is determined from a relationship known for a single-track model between the steering angle $\delta$, an Ackermann angle $\Delta_A$, a slip angle $\lambda_f$ of a front wheel, and the third slip angle $\lambda_{r3}$ and wherein the slip angle $\lambda_f$ is determined from a previously known ratio of the slip angle $\lambda_f$ to a vehicle status, and
determining the slip angle $\lambda_r$ from precisely two of the slip angles $\lambda_{r1}$, $\lambda_{r2}$ and $\lambda_{r3}$ by a data fusion, wherein a respective deviation between the slip

angles $\lambda_{r1}$, $\lambda_{r2}$ and $\lambda_{r3}$ is ascertained, and wherein the slip angle $\lambda_r$ is determined by the data fusion of the two slip angles of the slip angles $\lambda_{r1}$, $\lambda_{r2}$ and $\lambda_{r3}$ having the smallest deviation from one another.

2. Method according to the preceding claim, wherein the first state estimator (30) is a Kalman filter or an expanded Kalman filter.

3. Method according to either of the preceding claims, wherein the second state estimator (40) is a Kalman filter or an expanded Kalman filter.

4. Method according to one of the preceding claims, wherein the orientation of the motor vehicle in space is determined as the input variable of the first state estimator (30) by a roll angle $\Phi$, a yaw angle $\Psi$, and a pitch angle $\Theta$ of the motor vehicle.

5. Method according to one of the preceding claims, wherein

   a curve radius R of a curve described by the motor vehicle is determined and the curve radius R is an input variable of the first state estimator (30).

6. Method according to the preceding claim, wherein the curve radius R and the orientation of the motor vehicle are determined from a roll rate $\dot{\Phi}$, a yaw rate $\dot{\Psi}$, and a pitch rate $\dot{\Theta}$ as well as an acceleration of the motor vehicle in space and a vehicle velocity v.

7. Method according to one of the preceding claims, wherein

   a vehicle mass m of the motor vehicle is determined, a coefficient of friction $\mu$ between a roadway and a tyre of the rear wheel is determined, and the vehicle mass m and the coefficient of friction $\mu$ are input variables of the first state estimator (30).

8. Method according to one of the preceding claims, wherein the movement vector of the motor vehicle is determined as an input variable of the second state estimator (40) from a change of a vehicle position ascertained using a GPS and/or from a change of an Earth's magnetic field measured using a magnetometer.

9. Method according to one of the preceding claims, wherein

a measurement deviation between the slip angle $\lambda_r$ determined by the data fusion is determined as a measured value and the slip angle $\lambda_{r1}$, $\lambda_{r2}$ or $\lambda_{r3}$ not used in the determination of the slip angle $\lambda_r$ is determined as a reference value.

10. Method according to one of the preceding claims, wherein the vehicle status for determining the third slip angle $\lambda_{r3}$ is determined by a vehicle velocity v of the motor vehicle, a curve radius R of a curve described by the motor vehicle, and a roll angle $\Phi$.

11. Method according to the preceding claim, wherein

   a tyre lateral force $F_{s,f}$ on a tyre of the front wheel is determined from the curve radius R and the vehicle velocity v using a third state estimator (53) and the slip angle $\lambda_f$ is predetermined for the roll angle $\Phi$ and the tyre lateral force $F_{s,f}$.

12. System for traction control of a rear wheel of a single-track motor vehicle comprising a control unit, wherein the control unit is designed to determine a slip angle $\lambda_r$ in accordance with the method according to one of preceding Claims 1 to 11.

**Revendications**

1. Procédé permettant de déterminer un angle de dérive $\lambda_r$ d'une roue arrière d'un véhicule à moteur à voie unique pour le contrôle de traction de la roue arrière du véhicule à moteur à voie unique par une boucle d'asservissement, dans lequel l'angle de dérive $\lambda_r$ de la roue arrière est déterminé comme une grandeur de rétroaction de la boucle d'asservissement par l'étape suivante consistant à :

   • déterminer un premier angle de dérive $\lambda_{r1}$ à l'aide d'un premier estimateur d'état (30), dans lequel les grandeurs d'entrée du premier estimateur d'état (30) sont au moins un angle de braquage $\delta$ au niveau de la roue avant du véhicule à moteur et une orientation du véhicule à moteur dans l'espace, **caractérisé en ce que** le procédé présente en outre les étapes suivantes consistant à :
   • déterminer un deuxième angle de dérive $\lambda_{r2}$ à l'aide d'un deuxième estimateur d'état (40), dans lequel les grandeurs d'entrée du deuxième estimateur d'état (40) sont au moins un angle de braquage $\delta$ au niveau de la roue avant du véhicule à moteur et un vecteur de mouvement du véhicule à moteur au centre de masse du véhicule à moteur,

• déterminer un troisième angle de dérive $\lambda_{r3}$, dans lequel le troisième angle de dérive $\lambda_{r3}$ est déterminé à partir d'une relation connue pour un modèle à voie unique entre l'angle de braquage $\delta$, un angle d'Ackermann $\Delta_A$, un angle de dérive $\lambda_f$ d'une roue avant et le troisième angle de dérive $\lambda_{r3}$, et dans lequel l'angle de dérive $\lambda_f$ est déterminé à partir d'une relation préalablement connue entre 1 angle de dérive $\lambda_f$ et un état de véhicule, et déterminer l'angle de dérive $\lambda_r$ à partir de deux des angles de dérive $\lambda_{r1}$, $\lambda_{r2}$ et $\lambda_{r3}$ exactement par une fusion de données, un écart respectif entre les angles de dérive $\lambda_{r1}$, $\lambda_{r2}$ et $\lambda_{r3}$ étant établi, et

dans lequel l'angle de dérive $\lambda_r$ est déterminé par la fusion de données des deux angles de dérive des angles de dérive $\lambda_{r1}$, $\lambda_{r2}$ et $\lambda_{r3}$ ayant le plus faible écart l'un par rapport à l'autre.

2. Procédé selon la revendication précédente, dans lequel
le premier estimateur d'état (30) est un filtre de Kalman ou un filtre de Kalman étendu.

3. Procédé selon l'une quelconque des revendications précédentes, dans lequel
le deuxième estimateur d'état (40) est un filtre de Kalman ou un filtre de Kalman étendu.

4. Procédé selon l'une quelconque des revendications précédentes, dans lequel
l'orientation du véhicule à moteur dans l'espace est déterminée comme une grandeur d'entrée du premier estimateur d'état (30) par un angle de roulis $\Phi$, un angle de lacet $\Psi$ et un angle de tangage $\Theta$ du véhicule à moteur.

5. Procédé selon l'une quelconque des revendications précédentes, dans lequel

un rayon de virage R d'un virage négocié par le véhicule à moteur est déterminé, et
le rayon de virage R est une grandeur d'entrée du premier estimateur d'état (30).

6. Procédé selon la revendication précédente, dans lequel
le rayon de virage R et l'orientation du véhicule à moteur sont déterminés à partir d'un taux de roulis $\dot{\Phi}$, d'un taux de lacet $\dot{\Psi}$ et d'un taux de tangage $\dot{\Theta}$ ainsi que d'une accélération du véhicule à moteur dans l'espace et d'une vitesse de véhicule v.

7. Procédé selon l'une quelconque des revendications précédentes, dans lequel

une masse de véhicule m du véhicule à moteur est déterminée,
un coefficient de frottement $\mu$ entre une chaussée et un pneu de la roue arrière est déterminé, et
la masse de véhicule m et le coefficient de frottement $\mu$ sont des grandeurs d'entrée du premier estimateur d'état (30).

8. Procédé selon l'une quelconque des revendications précédentes, dans lequel
le vecteur de mouvement du véhicule à moteur est déterminé comme une grandeur d'entrée du deuxième estimateur d'état (40) à partir d'un changement d'une position de véhicule établie à l'aide d'un GPS et/ou à partir d'un changement d'un champ magnétique terrestre mesuré à l'aide d'un magnétomètre.

9. Procédé selon l'une quelconque des revendications précédentes, dans lequel
un écart de mesure entre l'angle de dérive $\lambda_r$ déterminé par la fusion de données comme une valeur de mesure, et l'angle de dérive $\lambda_{r1}$, $\lambda_{r2}$ ou $\lambda_{r3}$ non utilisé pour la détermination de l'angle de dérive Ar comme une valeur de référence est déterminé.

10. Procédé selon l'une quelconque des revendications précédentes, dans lequel
l'état de véhicule pour la détermination du troisième angle de dérive $\lambda_{r3}$ est déterminé par une vitesse de véhicule v du véhicule à moteur, un rayon de virage R d'un virage négocié par le véhicule à moteur et un angle de roulis $\Phi$.

11. Procédé selon la revendication précédente, dans lequel

un troisième estimateur d'état (53) détermine une force transversale de pneu $F_{s,f}$ au niveau d'un pneu de la roue avant à partir du rayon de virage R et de la vitesse de véhicule v, et
l'angle de dérive $\lambda_f$ pour l'angle de roulis $\Phi$ et la force transversale de pneu $F_{s,f}$ est prédéterminé.

12. Système de contrôle de traction d'une roue arrière d'un véhicule à moteur à une voie, comprenant un appareil de commande, dans lequel
l'appareil de commande est réalisé pour déterminer un angle de dérive $\lambda_r$ selon le procédé selon l'une quelconque des revendications précédentes 1 à 11.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016223070 A1
- DE 102012219935 A1
- US 2013144476 A1
- DE 102010003951 A1